# EUROPEAN PATENT SPECIFICATION

(11) **EP 2 452 848 B1**
(45) Date of publication and mention of the grant of the patent: **21.11.2018**
(21) Application number: 10796901.6
(22) Date of filing: 06.07.2010
(51) Int. Cl.: B60L 15/20, B60L 11/08, B60L 1/00, B60K 6/46, B60L 7/14, B60L 7/18, B60L 11/12

(54) **ELECTRIC VEHICLE CONTROL DEVICE**
ELEKTRISCHE FAHRZEUGSTEUERUNGSVORRICHTUNG
DISPOSITIF DE COMMANDE DE VÉHICULE ÉLECTRIQUE

(30) Priority: 07.07.2009 JP 2009160977
(43) Date of publication of application: 16.05.2012
(73) Proprietor: Kabushiki Kaisha Toshiba, Minato-ku Tokyo 105-8001 (JP)
(72) Inventor: LIN, Min, Tokyo (JP); NUMAZAKI, Mitsuhiro, Tokyo (JP); UJIIE, Akihiko, Tokyo (JP); NAKAZAKA, Yosuke, Tokyo (JP)
(74) Representative: Hoffmann Eitle
(86) International application number: PCT/JP2010/004413
(87) International publication number: WO 2011/004588

(56) References cited:
- CN-A- 1 976 828
- DE-A1-102004 028 353
- DE-T2- 69 832 533
- JP-A- 6 296 302
- JP-A- 8 289 406
- JP-A- H1 169 501
- JP-A- 2001 190 007
- JP-A- 2003 259 689
- JP-A- 2007 318 970
- US-A- 5 589 743
- US-A1- 2005 285 554
- US-A1- 2007 075 686
- US-A1- 2007 103 002
- US-A1- 2008 048 497
- US-A1- 2008 276 825
- US-A1- 2008 281 479
- US-A1- 2008 281 479

## Description

### FIELD

Embodiments described herein relates to an electric vehicle control device for controlling an electric vehicle.

### BACKGROUND

Electric vehicle control devices including an AC synchronous generator, a diode rectifier, an inverter and an auxiliary power source device (or an auxiliary power supply device) are generally known. The diode rectifier converts AC power generated by the AC synchronous generator into DC power. The inverter converts the DC power that was converted by the diode rectifier into AC power, which it then supplies to a vehicle drive motor to drive the vehicle. The DC side of the diode rectifier and the DC side of the inverter are connected by a DC link. The auxiliary power source device is connected with this DC link. The auxiliary power source device converts the DC power that was supplied from the DC link to AC power and supplies this to auxiliary equipment or a CVCF (constant voltage constant frequency) load. An example is disclosed in Laid-open Japanese Patent Publication Tokkai 2009-060723.

However, in an arrangement, as described above, in which a diesel engine is mounted and AC power is generated from an AC generator by driving the AC generator using this diesel engine there are demands for further reduction in size and lowering of the cost of the electric vehicle control device that controls the electric vehicle by controlling this AC power.

US 2008/048497 A1 teaches a load-lifting apparatus and method of storing energy for the same. A load-lifting apparatus has one or more prime power sources, one or more energy storage systems and regenerative braking. Regenerative energy is recovered when the load-lifting apparatus lowers its load. The elements of the prime power sources, energy storage devices and electrical components may be distributed to provide stability for the load-lifting apparatus. The general power architecture and energy recovery method can be applied to cranes, rubber-tired gantry cranes, overhead cranes, mobile cranes, ship-to-shore cranes, container cranes, rail-mounted gantry cranes, straddle carrier cranes and elevators. In such an architecture, the energy storage system helps alleviate the power rating requirement of the prime power source with respect to the peak power requirement for lifting a load.

DE 10 2004 028353 A1 relates to an energy management system for a transport device, in particular for a motor vehicle running on fuel and electricity, comprising an energy source, an intermediate energy store and an electric energy consumer, in particular an electric drive. Control and/or regulation of the provision of energy, which is dependent on information relating to future energy requirements, supplied by means of at least one part of the transport device, can be carried out by the energy management system by means of the intermediate energy store and/or the energy requirements. The invention also relates to a corresponding method and to a corresponding transport device.

US 2005/285554 A1 discloses an energy storage system and a method for hybrid propulsion. The system comprises one or more hybrid propulsion traction drives having an electric motor operable to produce mechanical power for propulsion. A hybrid propulsion traction drive is operable to receive power from an on-board power generation system. The electric motor is operable to receive power from an energy storage unit and operable to supply power to the energy storage unit. The energy storage unit may be coupled to the electric motor via a switch.

### DISCLOSURE OF INVENTION

Accordingly, an object of the present invention is to provide an electric vehicle control device with which reduction in size and lowered costs can be achieved.

The present invention provides an electric vehicle control device as defined in claim 1. Preferred embodiments are defined in the dependent claims 2 and 3.

With the present invention, an electric vehicle control device can be provided with which reduction in size and lowering of costs can be achieved.

### BRIEF DESCRIPTION OF DRAWINGS

Fig. 1 is a layout diagram showing the layout of an electric vehicle control device according to a first unclaimed embodiment.
Fig. 2 is a layout diagram showing the layout of an electric vehicle control device according to a second unclaimed embodiment;
Fig. 3 is a layout diagram showing the layout of an electric vehicle control device according to a third unclaimed embodiment.
Fig. 4 is a layout diagram showing the layout of an electric vehicle control device according to a first embodiment of the present invention;
Fig. 5 is a layout diagram showing the layout of an electric vehicle control device according to a second embodiment of the present invention;
Fig. 6 is a layout diagram showing the layout of an electric vehicle control device according to a third embodiment of the present invention; and
Fig. 7 is a layout diagram showing the layout of an electric vehicle control device according to a fourth embodiment of the present invention.

### BEST MODE FOR CARRYING OUT THE INVENTION

Embodiments of the present invention as well as examples helpful for understanding the present invention are described below with reference to the drawings.

### (First unclaimed embodiment)

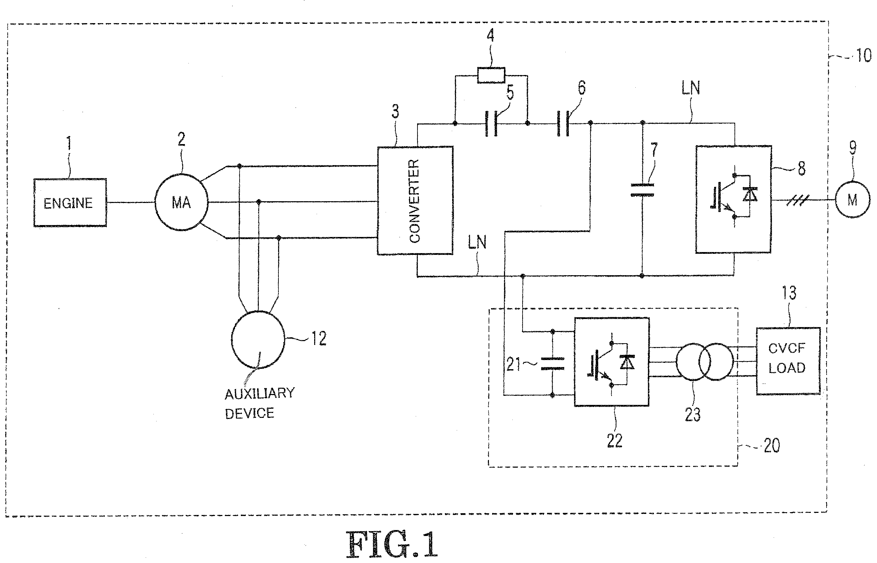

Fig. 1 is a layout diagram showing the layout of an electric vehicle control device 10 according to a first unclaimed embodiment. It should be noted that, in the following drawings, corresponding parts are denoted by the same reference numerals and further detailed description thereof is dispensed with, the description focusing on the parts that are different. The same applies in the subsequent examples and embodiments, to avoid repetition of description.

An electric vehicle control device 10 comprises: an engine 1, an AC synchronous generator 2, converter 3, a charging resistance 4, contactors 5, 6, a filter capacitor 7, an inverter 8, auxiliary device 12, a CVCF (constant voltage constant frequency) load 13, and an auxiliary power unit (APU) 20. A vehicle drive motor 9 is connected with the inverter 8.

The engine 1 is connected with the AC synchronous generator 2. The engine 1 drives the AC synchronous generator 2.

The AC synchronous generator 2 is an AC power source that outputs three-phase AC power. The AC synchronous generator 2 is a generator of a synchronous machine. The AC synchronous generator 2 is driven by the engine 1 to generate three-phase AC power. The AC synchronous generator 2 is connected with the auxiliary device 12 and the converter 3. During powered operation, the AC synchronous generator 2 supplies the AC power that it generates to the auxiliary device 12 and the converter 3.

The converter 3 is a bidirectional converter (power converter). The converter 3 may be for example a PWM (pulse width modulation) converter, diode rectifier, or thyristor converter.

During powered operation, the converter 3 converts the three-phase AC power that is supplied from the AC synchronous generator 2 to DC power. The converter 3 supplies this converted DC power to the inverter 8 and an auxiliary power source device 20.

During regenerative operation, the converter 3 is supplied with DC power from the inverter 8. The converter 3 converts the DC power that is supplied from the inverter 8 to three-phase AC power. The converter 3 supplies the converted three-phase AC power to the auxiliary device 12.

The inverter 8 is a bidirectional converter (power converter). The DC side of the inverter 8 is connected by a DC link LN with the DC side of the converter 3. The AC side of the inverter 8 is connected with the vehicle drive motor 9. The inverter 8 is a VVVF inverter that performs VVVF (variable voltage variable frequency) control of the vehicle drive motor 9.

During powered operation, the inverter 8 converts the DC power that is supplied from the converter 3 to three-phase AC power. The inverter 8 supplies this converted three-phase AC power to the vehicle drive motor 9.

During regenerative operation, the inverter 8 is supplied with three-phase AC power generated by the vehicle drive motor 9. The inverter 8 converts the three-phase AC power that is supplied from the vehicle drive motor 9 to DC power. The inverter 8 supplies the converted DC power to the auxiliary power source device 20 and converter 3.

The vehicle drive motor 9 is connected with the AC side of the inverter 8. The vehicle drive motor 9 is driven by the three-phase AC power that is supplied from the inverter 8. The vehicle drive motor 9 is the drive source for moving the electric vehicle. During regenerative operation, the vehicle motor 9 generates AC power (regenerated power). The vehicle drive motor 9 supplies the generated three-phase AC power to the inverter 8.

A filter capacitor 7 is respectively connected with the positive terminal and the negative terminal of the DC link LN. The filter capacitor 7 reduces the current ripple flowing on the DC link LN.

The contactors 5, 6 are inserted in series in the electrical path on the positive terminal side (or negative terminal side) of the DC link LN. By thus inserting the contactors 5, 6, DC current is supplied to the inverter 8 from the converter 3 (or from the inverter 8 to the converter 3). By opening the contactors 5, 6, DC power supply from the converter 3 to the inverter 8 (or from the inverter 8 to the converter 3) is stopped.

The charging resistance 4 is connected in parallel with the contactor 5. The charging resistance 4 is provided in order to prevent over-current flowing into the filter capacitor 7 when closure of the contactor 6 is effected.

The auxiliary device 12 is connected in series (directly) with the AC of the AC synchronous generator 2. The auxiliary device 12 is auxiliary equipment capable of withstanding harmonics from the converter 3. The auxiliary equipment is equipment that presents a load, other than the vehicle motor 9. The auxiliary device 12 is constituted by an auxiliary rotary machine. During powered operation, the auxiliary device 12 is driven by AC power that is supplied from the AC synchronous generator 2. During regenerative operation, the auxiliary device 12 is driven by AC power that is supplied from the converter 3.

The auxiliary power source device 20 converts the DC power that is supplied from the DC link LN to AC power. The auxiliary power source device 20 supplies this converted AC power to a CVCF (Constant Voltage and Constant Frequency) load 13.

The CVCF load 13 is for example a load of AC 100V or a load of DC 100V. The AC load may be for example air conditioning equipment. The DC load may be for example the power source of the electric vehicle illumination or control circuitry.

The auxiliary power source device 20 comprises an auxiliary power source filter capacitor 21, an auxiliary power source inverter 22 and a transformer 23.

The auxiliary power source inverter 22 is connected with the DC link LN. The auxiliary power source inverter 22 converts the DC power that is supplied from the DC link LN to AC power. The auxiliary power source inverter 22 supplies the converted AC power through the transformer 23 to the CVCF load 13.

The auxiliary power source filter capacitor 21 is respectively connected with the positive terminal and the negative terminal on the DC side of the auxiliary power source inverter 22. The auxiliary power source filter capacitor 21 reduces the current ripple flowing to the DC side of the auxiliary power source inverter 22.

The transformer 23 transforms the AC voltage that is supplied from the auxiliary power source inverter 22 and supplies the transformed voltage to the CVCF load 13.

With this example, by connecting the auxiliary device 12 constituted by auxiliary equipment capable of withstanding harmonics in series with the output of the AC synchronous generator 2, the load of the auxiliary power source device 20 can be reduced. In this way, the rated capacity of the auxiliary power source device 20 can be reduced. Consequently, overall, reduction in size and lowering of costs of the electric vehicle control device 10 can be achieved.

Also, by employing an AC synchronous generator 2 constituted by a synchronous machine, the degrees of freedom of the converter selected for the converter 3 can be increased. In this way, an optimum converter from the point of view of reduction of size and costs can be selected.

### (Second unclaimed embodiment)

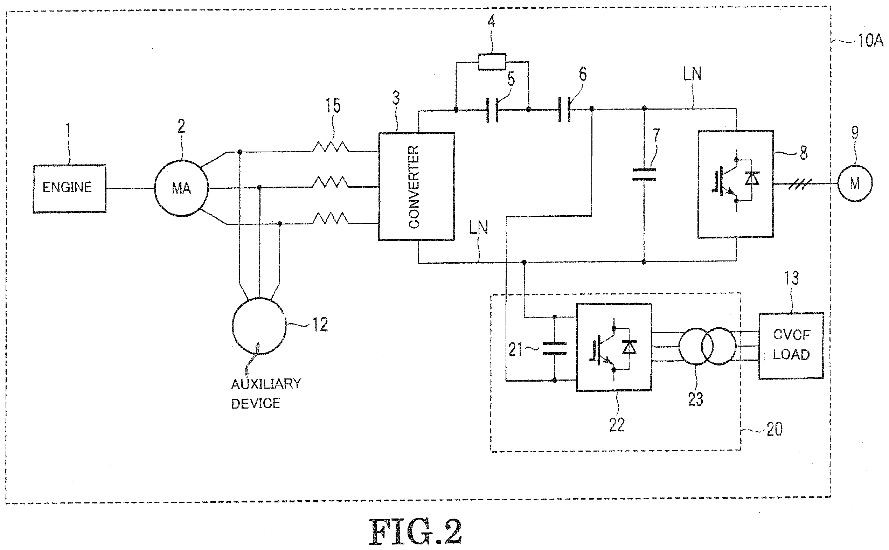

Fig. 2 is a layout diagram showing the layout of an electric vehicle control device 10 according to a second unclaimed embodiment.

The electric vehicle control device 10A is constituted by inserting an AC reactor 15 in the electrical path connecting the converter 3 and the auxiliary device 12, in an electric vehicle control device 10 according to the first example shown in Fig. 1. Otherwise, this is the same as the first unclaimed embodiment.

An AC reactor 15 is inserted in the lead of each phase of the 3-phase AC. The AC reactors 15 are AC filters that reduce current ripple. During powered operation, the AC reactors 15 reduce the ripple of the input current that is input to the converter 3. During regenerative operation, the AC reactors 15 reduce the ripple of the output current that is output from the converter 3.

With this example, in addition to the beneficial effects of the first example, the following beneficial effects can be obtained.

In the electric vehicle control device 10A, the ripple generated in the current flowing between the converter 3 and the auxiliary device 12 can be reduced by providing AC reactors 15 as AC filters between the converter 3 and the auxiliary device 12. In this way, with the electric vehicle control device 10A, performance can be improved.

### (Third unclaimed embodiment)

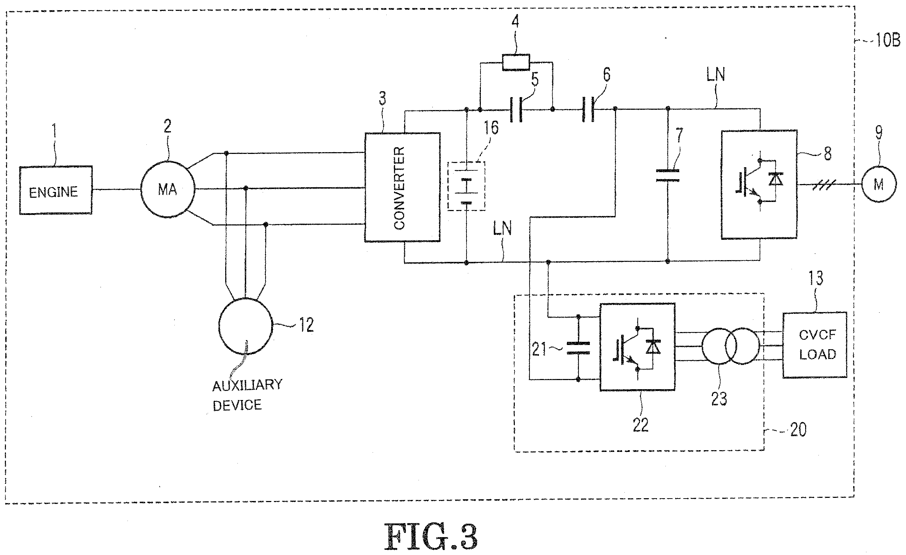

Fig. 3 is a layout diagram showing the layout of an electric vehicle control device 10B according to a third example.

The electric vehicle control device 10B is constituted by connecting an accumulator device 16 with the DC link LN in an electric vehicle control device 10 according to the first example shown in Fig. 1. Otherwise, this is the same as the first unclaimed embodiment.

The positive electrode terminal and the negative electrode terminal of the accumulator device 16 are respectively connected with the positive electrode and negative electrode of the DC link LN. The accumulator device 16 is a power source whereby electrical energy can be accumulated. The accumulator device 16 is charged with the DC power of the DC link LN during operation of the AC synchronous generator 2. When the AC synchronous generator 2 is stopped, the accumulator device 16 supplies DC power to the DC link LN. In this way, the accumulator device 16 supplies power to the auxiliary device 12 through the converter 3.

With this example, in addition to the beneficial effects of the first example, the following beneficial effects can be obtained.

With the electric vehicle control device 10A, power can be supplied from the accumulator device 16 to the auxiliary device 12 through the converter 3 even when the AC synchronous generator 2 is stopped, due to the connection of the accumulator device 16 with the PC link LN. In this way, with the electric vehicle control device 10A, a construction can be achieved having redundancy in regard to power supply to the auxiliary device 12.

### (First embodiment)

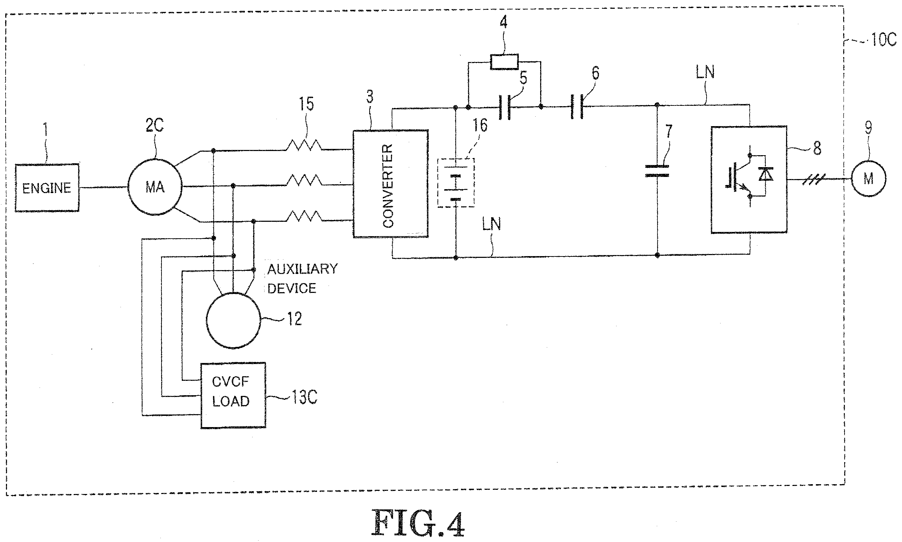

Fig. 4 is a layout diagram showing the layout of an electric vehicle control device 10C according to a first embodiment of the present invention.

In the electric vehicle control device 10C, an AC reactor 15 according to the second example is inserted in the electrical path connecting the converter 3 and the auxiliary device 12, in the electric vehicle control device 10 according to the first example shown in Fig. 1 and the accumulator device 16 according to the third example is connected with the DC link LN. Instead of the AC synchronous generator 2, an AC synchronous generator 2c is provided, and instead of the CVCF load 13, a CVCF load 13c is connected in series with the output side of the AC synchronous generator 2c: thus the construction is one in which the auxiliary power source device 20 is eliminated. Otherwise, this is the same as the first unclaimed embodiment.

The AC synchronous generator 2C performs CVCF operation. In this way, the AC synchronous generator 2C outputs power of constant voltage and constant frequency. Otherwise, the AC synchronous generator 2C is the same as the AC synchronous generator 2 according to the first unclaimed embodiment.

The CVCF load 13C is connected in series with the output of the AC synchronous generator 2C. The CVCF load 13C is connected with the electrical path between the AC synchronous generator 2C and the AC reactor 15. During powered operation, the CVCF load 13C is supplied with AC power from the AC synchronous generator 2C. During regenerative operation, the CVCF load 13C is supplied with AC power from the converter 3. Otherwise, the CVCF load 13C is the same as the CVCF load 13 of the first unclaimed embodiment.

With this embodiment, in addition to the beneficial effects of the first example, second example and third example, the following beneficial effects can be obtained.

By arranging for the AC synchronous generator 2C to perform CVCF operation and connecting the CVCF load 13C with the AC side of the converter 3 through the AC reactors 15, all of the auxiliary equipment (auxiliary device 12 and CVCF load 13C) can be connected with the AC synchronous generator 2C. In this way, the auxiliary power source device 20 constituting the power source for the auxiliary equipment provided in the first example can be eliminated. Consequently, yet further reduction in size and lowering of costs can be achieved overall with the electric vehicle control device 10, compared with the first unclaimed embodiment.

### (Second embodiment)

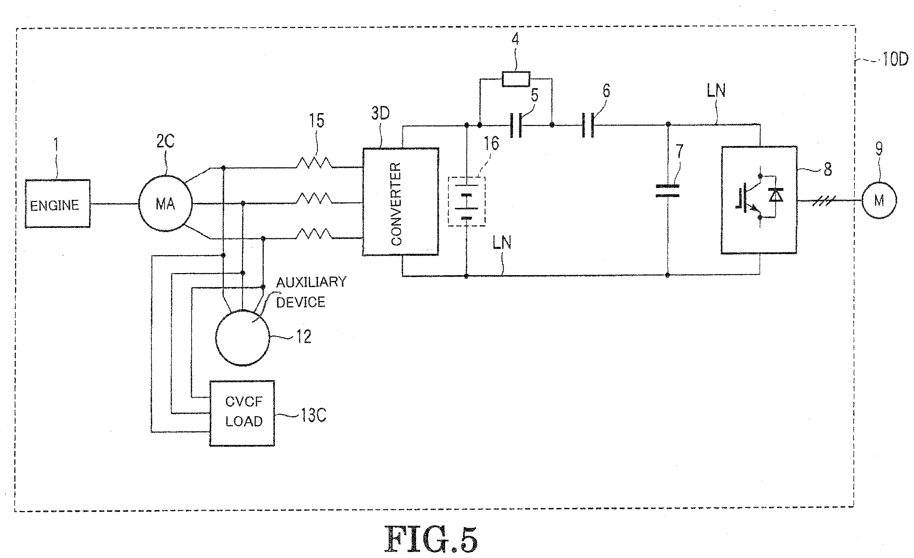

Fig. 5 is a layout diagram showing the layout of an electric vehicle control device 10D according to a second embodiment of the present invention.

In the electric vehicle control device 10D, the converter 3 in the electric vehicle control device 10C according to the first embodiment shown in Fig. 4 is replaced by a PWM converter 3D. Otherwise, this is the same as the first embodiment.

The PWM converter 3D is a converter that is PWM-controlled. The PWM converter 3D performs CVCF operation when power is supplied to the auxiliary device 12 or CVCF load 13C by the regenerated power from the inverter 8 or the power from the accumulator device 16. In this way, the PWM converter 3D converts the DC power of the DC link LN into stabilized constant-voltage constant-frequency three-phase AC power, which it supplies to the auxiliary device 12 or CVCF load 13C.

With this embodiment, in addition to the beneficial effects of the first embodiment, the following beneficial effects can be obtained.

Owing to the use of the PWM converter 3D, when the electric vehicle control device 10D supplies power to the auxiliary device 12 or CVCF load 13C by means of regenerated power from the inverter 8 or by means of power from the accumulator device 16, this electric vehicle control device 10D can supply stabilized constant-voltage constant-frequency three-phase AC power to the auxiliary device 12 or the CVCF load 13C. In this way, the performance of the electric vehicle control device 10D can be improved.

### [Third embodiment]

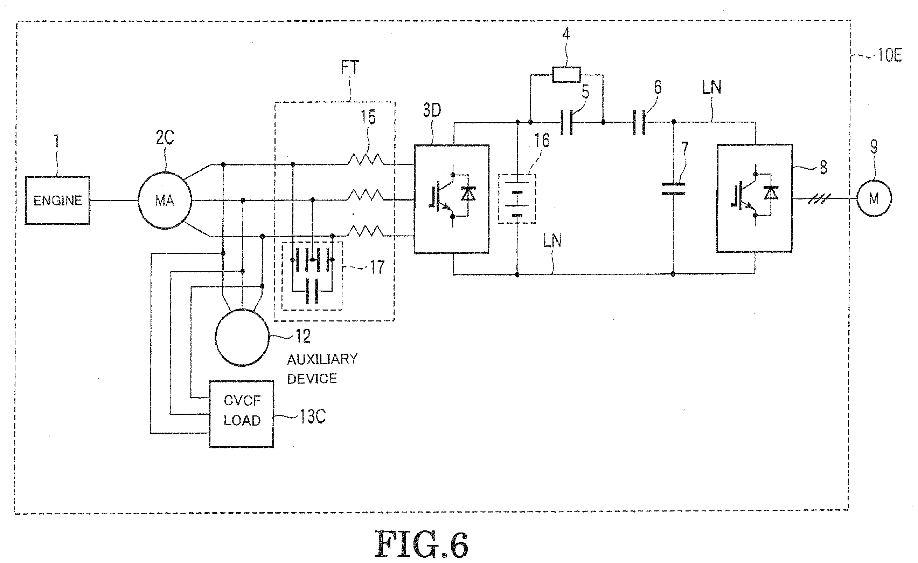

Fig. 6 is a layout diagram showing the layout of an electric vehicle control device 10E according to a third embodiment of the present invention.

The electric vehicle control device 10E has a construction in which, in the electric vehicle control device 10D according to the second embodiment shown in Fig. 5, a capacitor circuit 17 is provided between the AC reactors 15 and auxiliary device 12 and CVCF load 13c. Otherwise, this is the same as the second embodiment.

The capacitor circuit 17 is a circuit constituting an AC filter circuit FT. The AC filter circuit FT is constituted including an AC reactor 15 and capacitor circuit 17. By means of this construction, the AC filter circuit FT reduces current ripple.

The capacitor circuit 17 is constituted so as to achieve a minimum electrostatic capacitance so as to avoid phase-advance operation of the AC synchronous generator 2C, in the range in which it has the effect of reducing current ripple.

With this embodiment, in addition to the beneficial effect of the second embodiment, the following beneficial effects can be obtained.

With the electric vehicle control device 10E, owing to the provision of the capacitor circuit 17 as a filter capacitor, an AC filter circuit FT is constituted in which the AC reactors 15 act as filter reactors. In this way, the current ripple on the AC side of the PWM converter 3D can be reduced further compared with the case where only AC reactors 15 are employed.

Also, in the case of the AC synchronous generator 2C, when a capacitative load is connected, phase-advance armature current flows in the AC synchronous generator 2C. As a result, the induced voltage of the generator rises. With the electric vehicle control device 10E, by minimizing the electrostatic capacitance of the capacitor circuit 17 in the range in which it has the effect of reducing current ripple, phase-advance operation of the AC synchronous generator 2C can be suppressed.

### (Fourth embodiment)

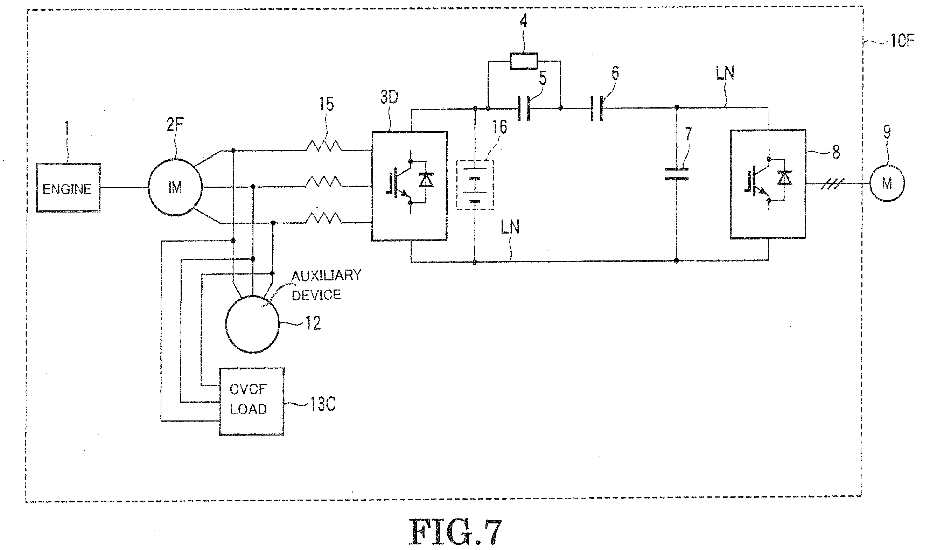

Fig. 7 is a layout diagram showing the layout of an electric vehicle control device 10F according to a fourth embodiment of the present invention.

In the case of the electric vehicle control device 10F, the AC synchronous generator 2C in the electric vehicle control device 10D according to the second embodiment shown in Fig. 5 is replaced by an induction generator 2F. Otherwise, this is the same as the second embodiment.

The induction generator 2F is a generator of an induction machine. The induction generator 2F performs CVCF operation. In this way, the induction generator 2F outputs power of constant voltage and constant frequency. Otherwise, the induction generator 2F is the same as the AC synchronous generator 2C according to the first embodiment.

With this embodiment, in addition to the beneficial effects of the second embodiment, the following beneficial effects can be obtained.

With the electric vehicle control device 10F, owing to the use of a PWM converter 3D, an induction generator 2F can be employed instead of the AC synchronous generator 2C. With the induction generator 2F, excitation control, which is necessary in the case of the AC synchronous generator 2C, is unnecessary, so control becomes straightforward. Consequently, in the case of the electric vehicle control device 10F, manufacturing costs can be lowered by employing an induction generator 2F.

### Industrial Applicability

The present invention can be applied to electric vehicle control devices used for controlling an electric vehicle.

## Claims

1. An electric vehicle control device (10C, 10D, 10E, 10F) comprising:
an AC generator, being an AC synchronous generator (2C) or an induction generator (2F), that generates AC power and outputs power of constant voltage and constant frequency;
a first bidirectional PWM power conversion unit (3, 3D) that converts said AC power generated from said generator (2C, 2F) to DC power; and
a second bidirectional power conversion unit (8) connected by a DC link (LN) with said first bidirectional PWM power conversion unit (3, 3D), that converts DC power converted by said first bidirectional PWM power conversion unit (3, 3D) and that supplies AC power to a driving motor (9) constituting a motive power source for driving an electric vehicle;
an accumulator device (16), respectively connected with a positive electrode and a negative electrode of the DC link (LN);
a first AC load (12) capable of withstanding harmonics, that is connected with said AC generator (2C, 2F);
a constant voltage and constant frequency, CVCF, load (13C) connected in series with an output side of the generator (2C, 2F),
wherein:
said first bidirectional PWM power conversion unit (3, 3D) converts said DC power of said DC link to AC power of constant voltage and constant frequency, and said first bidirectional PWM power conversion unit (3, 3D) outputs to the first AC load (12) or the CVCF load (13C) .

2. The electric vehicle control device (10C, 10D, 10E, 10F) according to claim 1, further comprising
an AC filter (7) that reduces a current ripple generated between said first AC load and said first power conversion unit.

3. The electric vehicle control device (10C, 10D, 10E, 10F) according to any of claim 1 to claim 2, further comprising
charging means (4) that charges said DC power of said DC link, connected with said DC link.

4. An electric vehicle comprising:
the electric vehicle control device (10) according to any of claims 1 - 3.

## Patentansprüche

1. Elektrofahrzeug-Steuerungsvorrichtung (10C, 10D, 10E, 10F), umfassend:
einen Wechselstromgenerator, der ein synchroner Wechselstromgenerator (2C) oder ein Induktionsgenerator (2F) ist, der Wechselstrom generiert und Strom mit einer konstanten Spannung und konstanten Frequenz ausgibt;
eine erste bidirektionale PWM-Stromumrichtungseinheit (3, 3D), die den von dem Generator (2C, 2F) generierten Wechselstrom in Gleichstrom umrichtet; und
eine zweite bidirektionale Stromumrichtungseinheit (8), die durch eine Gleichstromverknüpfung (LN) mit der ersten bidirektionalen PWM-Stromumrichtungseinheit (3, 3D) verbunden ist, die Gleichstrom, der durch die erste bidirektionale PWM-Stromumrichtungseinheit (3, 3D) umgerichtet wurde, umwandelt, und die Wechselstrom an einen Antriebsmotor (9) speist, der eine Antriebsquelle zum Fahren eines Elektrofahrzeugs bildet;
eine Akkumulatorvorrichtung (16), die mit jeweils einer positiven Elektrode und einer negativen Elektrode der Gleichstromverknüpfung (LN) verbunden ist;
eine erste Wechselstromlast (12), die in der Lage ist, Oberschwingungen zu widerstehen, die mit dem Wechselstromgenerator (2C, 2F) verbunden ist;
eine konstante Spannung und konstante Frequenz, CVCF, Last (13C), die mit einer Ausgangsseite des Generators (2C, 2F) in Reihe verbunden ist,
wobei:
die erste bidirektionale PWM-Stromumrichtungseinheit (3, 3D) den Gleichstrom der Gleichstromverknüpfung in Wechselstrom mit konstanter Spannung und konstanter Frequenz umrichtet, und wobei die erste bidirektionale PWM-Stromumrichtungseinheit (3, 3D) an die erste Wechselstromlast (12) oder die CVCF-Last (13C) ausgibt.

2. Elektrofahrzeug-Steuerungsvorrichtung (10C, 10D, 10E, 10F) nach Anspruch 1, weiter umfassend
einen wechselstromseitigen Filter (7), der die zwischen der ersten Wechselstromlast und der ersten Stromumrichtungseinheit generierte Stromschwankung reduziert.

3. Elektrofahrzeug-Steuerungsvorrichtung (10C, 10D, 10E, 10F) nach einem von Anspruch 1 bis Anspruch 2, weiter umfassend
ein Lademittel (4), das den Gleichstrom der Gleichstromverknüpfung, der mit der Gleichstromverknüpfung verbunden ist, lädt.

4. Elektrofahrzeug, umfassend:
die Elektrofahrzeug-Steuerungsvorrichtung (10) nach einem der Ansprüche 1-3.

## Revendications

1. Dispositif de commande de véhicule électrique (10C, 10D, 10E, 10F) comprenant :
un générateur CA, qui est un générateur synchrone CA (2C) ou un générateur à induction (2F), qui génère de l'énergie CA et délivre de l'énergie de tension constante et de fréquence constante ;
une première unité de conversion d'énergie PWM bidirectionnelle (3, 3D) qui convertit ladite énergie CA générée par ledit générateur (2C, 2F) en énergie CC ; et
une seconde unité de conversion d'énergie bidirectionnelle (8) connectée par une liaison CC (LN) à ladite première unité de conversion d'énergie PWM bidirectionnelle (3, 3D), qui convertit l'énergie CC convertie par ladite première unité de conversion d'énergie PWM bidirectionnelle (3, 3D) et qui fournit de l'énergie CA à un moteur d'entraînement (9) constituant une source d'énergie motrice pour entraîner un véhicule électrique ;
un dispositif accumulateur (16) respectivement connecté à une électrode positive et à une électrode négative de la liaison CC (LN) ;
une première charge CA (12) capable de supporter des harmoniques, qui est connectée audit générateur CA (2C, 2F) ;
une charge de tension constante et de fréquence constante CVCF (13C) connectée en série à un côté de sortie du générateur (2C, 2F),
dans lequel
ladite première unité de conversion d'énergie PWM bidirectionnelle (3, 3D) convertit ladite énergie CC de ladite liaison CC en énergie CA de tension constante et de fréquence constante, et ladite première unité de conversion d'énergie PWM bidirectionnelle (3, 3D) alimente la première charge CA (12) ou la charge CVCF (13C).

2. Dispositif de commande de véhicule électrique (10C, 10D, 10E, 10F) selon la revendication 1, comprenant en outre :
un filtre CA (7) qui réduit une ondulation de courant générée entre ladite première charge CA et ladite première unité de conversion d'énergie.

3. Dispositif de commande de véhicule électrique (10C, 10D, 10E, 10F) selon l'une quelconque des revendications 1 à 2, comprenant en outre
des moyens de charge (4) qui chargent ladite énergie CC de ladite liaison CC, connectés à ladite liaison CC.

4. Véhicule électrique comprenant :
le dispositif de commande de véhicule électrique (10) selon l'une quelconque des revendications 1 à 3.
